# EUROPEAN PATENT APPLICATION

(11) **EP 3 739 174 A1**
(43) Date of publication of application: **18.11.2020**
(21) Application number: 18900459.1
(22) Date of filing: 12.12.2018
(51) Int. Cl.: F01D 19/00, F01D 17/00, F02C 1/02, H02P 9/04

(54) **COMPRESSED AIR ENERGY STORAGE POWER GENERATION DEVICE AND COMPRESSED AIR ENERGY STORAGE POWER GENERATION METHOD**

(30) Priority: 09.01.2018 JP 2018001296
(71) Applicant: Kabushiki Kaisha Kobe Seiko Sho (Kobe Steel, Ltd.), Kobe-shi, Hyogo 651-8585 (JP)
(72) Inventor: NAKAMICHI, Ryo, Hyogo 676-8670 (JP); SATO, Takashi, Hyogo 676-70 (JP)
(74) Representative: TBK
(86) International application number: PCT/JP2018/045633
(87) International publication number: WO 2019/138764

(57) **Abstract**

The present invention provides a compressed air energy storage power generation device that, among stopped compressors and motors or expanders and generators, preferentially restarts a warmed up compressor and motor or a warmed up expander and generator. A compressed air energy storage power generation device 1 includes motors 10 to 13, compressors 20 to 23 that compress air, an accumulator tank 40 that accumulates compressed air, expanders 60 to 63 driven by the compressed air supplied from the accumulator tank, generators 70 to 73, and a control device 80 that controls driving of the motors 10 to 13. The control device 80 includes a power supply command receiver 82 that receives a power supply command, a priority setting unit 81 that sets priority to the motors so that the motor whose elapsed time from stop is shorter has higher priority, a number-of-units determination unit 83 that determines the number of the motors 10 to 13 to be driven on the basis of an amount of input power indicated by the power supply command, and a drive unit 84 that drives the motors 10 to 13 in the descending order of the priority until the number of the driven motors 10 to 13 becomes equal to the number of motors to be driven determined by the number-of-units determination unit 83.

## Description

### TECHNICAL FIELD

The present invention relates to a compressed air energy storage power generation device.

### BACKGROUND ART

Power generation using renewable energies, such as wind power generation and solar power generation, depends on weather conditions, and thus output is unstable. Therefore, it is necessary to level the output by using an energy storage system such as a compressed air energy storage (CAES) power generation system.

In order to improve power generation efficiency, it is preferable to minimize heat loss of energy in a compressed air energy storage power generation device (hereinafter, also simply referred to as "CAES power generation device"). Patent Document 1 discloses a compressed air energy storage power generation device that includes a plurality of high-temperature heat medium tanks and can prevent a high-temperature heat medium from mixing with a low-temperature heat medium.

### PRIOR ART DOCUMENT

### PATENT DOCUMENT

Patent Document 1: JP 2016-211464 A

### SUMMARY OF THE INVENTION

### PROBLEMS TO BE SOLVED BY THE INVENTION

A CAES power generation device may include a plurality of compressors and motors. Further, the CAES power generation device may include a plurality of expanders and generators. Patent Document 1 does not mention improvement in operation efficiency caused by controlling the number of units in those cases.

An object of the present invention is to improve operation efficiency by controlling the number of units in a CAES power generation device including a plurality of compressors and motors or a plurality of expanders and generators.

### MEANS FOR SOLVING THE PROBLEMS

One aspect of the present invention is to provide a compressed air energy storage power generation device including: a plurality of motors driven by input power; a plurality of compressors driven by the motors, respectively, to compress air; an accumulator tank configured to accumulate compressed air compressed by the compressors; an expander driven by the compressed air supplied from the accumulator tank; a generator driven by the expander to supply output power to a supply destination; and a control device configured to control driving of the motors, in which the control device includes a power supply command receiver configured to receive a power supply command indicating an amount of the input power before the input power is supplied, a priority setting unit configured to set priority to the motors so that the motor whose elapsed time from stop is shorter has higher priority, a number-of-units determination unit configured to determine the number of the motors to be driven on the basis of the amount of the input power indicated by the power supply command, and a drive unit configured to drive the motors in the descending order of the priority until the number of the driven motors becomes equal to the number of motors to be driven determined by the number-of-units determination unit.

In this aspect of the present invention, the priority setting unit sets the priority to the stopped motors and compressors so that the motor and compressor whose elapsed time from the stop is shorter have higher priority, and the motor and compressor are preferentially driven by the drive unit. That is, the motor and compressor that have operated most recently, i.e., have been warmed up, are preferentially driven. Therefore, it is possible to restart the motor and compressor without performing warm-up operation or only by slightly performing warm-up operation (hereinafter, referred to as "hot start"). This makes it possible to reduce energy required for warming up and improve charging efficiency. Compression heat of several hundred degrees is generated to compress air, and the apparatus is designed on the assumption that a state in which this compression heat is generated as a steady state. Thus, in order to improve the charging efficiency, it is more effective in determining the number of units to be driven on the basis of elapsed time from stop than in performing rotation on the basis of integrated operation time.

Another aspect of the present invention is to provide a compressed air energy storage power generation device including: a plurality of motors driven by input power; a plurality of compressors driven by the motors, respectively, to compress air; an accumulator tank configured to accumulate compressed air compressed by the compressors; an expander driven by the compressed air supplied from the accumulator tank; a generator driven by the expander to supply output power to a supply destination; and a control device configured to control driving of the motors, in which the control device includes a power supply command receiver configured to receive a power supply command indicating an amount of the input power before the input power is supplied, a priority setting unit configured to set first priority to the motors whose elapsed time from stop is shorter than a time period set in advance so that the motor whose elapsed time from stop is shorter has higher priority, and set second priority lower than the first priority to the motors whose elapsed time from stop is equal to or longer than the time period set in advance so that the motor having a smaller total power consumption amount has higher priority, a number-of-units determination unit configured to determine the number of the motors to be driven on the basis of the amount of the input power indicated by the power supply command, and a drive unit configured to drive the motors in the descending order of the priority including the first priority and the second priority until the number of the driven motors becomes equal to the number of motors to be driven determined by the number-of-units determination unit.

In this configuration, the motors and compressors whose elapsed time from stop is shorter than the time period set in advance (hereinafter, referred to as "warm-up maintaining time") are determined to be in a warmed-up state, and the motor and compressor that have operated most recently are preferentially driven on the basis of the first priority set by the priority setting unit. Therefore, the motor and compressor that can perform hot start more effectively are preferentially driven. This makes it possible to reduce energy required for warming up and improve the charging efficiency. Meanwhile, among the motors whose elapsed time from stop is equal to or longer than the time period set in advance (warm-up maintaining time), the motor having a smaller total power consumption amount is preferentially driven on the basis of the second priority set by the priority setting unit. Thus, differences in operation time between all the electric motors and between all the compressors can be kept small, and total operation time of both the motors and compressors can be leveled. Therefore, the motor and compressor that can perform hot start are preferentially driven. This makes it possible to reduce energy and improve the charging efficiency. Further, operation frequency of each motor and each compressor can be leveled.

The priority setting unit may reset the priority in a case where one of the motors is stopped and the number of stopped motors is two or more.

With this configuration, the priority is reset when the number of stopped motors is two. In a case where a power supply command is received before the warm-up maintaining time elapses from this point, one of those two motors which can perform hot start more effectively is preferentially driven. This makes it possible to effectively exhibit the effect of reducing energy and costs required for warming up. The same applies to a case where the number of stopped motors is three or more.

The priority setting unit may reset the priority in a case where all the motors stop.

With this configuration, the priority of the motors and compressors to be restarted is reset in a case where all the motors are stopped. Therefore, the motor and compressor that can perform hot start are preferentially driven. This makes it possible to exhibit the effect of reducing energy and costs.

Another aspect of the present invention is to provide a compressed air energy storage power generation device including: a motor driven by input power; a compressor driven by the motor to compress air; an accumulator tank configured to accumulate compressed air compressed by the compressor; a plurality of expanders driven by the compressed air supplied from the accumulator tank; a plurality of generators driven by the expanders, respectively, to supply output power to a supply destination; and a control device configured to control driving of the generators, in which the control device includes a discharge command receiver configured to receive a discharge command indicating an amount of the output power required by the supply destination before the output power is supplied, a priority setting unit configured to set priority to the generators so that the generator whose elapsed time from stop is shorter has higher priority, a number-of-units determination unit configured to determine the number of the generators to be driven on the basis of the amount of the output power indicated by the discharge command, and a drive unit configured to drive the generators in the descending order of the priority until the number of the driven generators becomes equal to the number of generators to be driven determined by the number-of-units determination unit.

In this configuration, the priority setting unit sets the priority to the stopped generators and expanders so that the generator and expander whose elapsed time from the stop is shorter have higher priority, and the generator and expander are preferentially driven by the drive unit. That is, the generator and expander that have operated most recently, i.e., have been warmed up, are preferentially driven. Therefore, it is possible to restart the generator and expander without performing warm-up operation or only by slightly performing warm-up operation (hot start). This makes it possible to reduce energy required for warming up and improve power generation efficiency. As compared with the compressor, cool air is generated in the expander due to expansion, instead of heat generated due to compression. Thus, it takes more time to perform warm-up operation in many cases. Therefore, warm-up operation in this embodiment is particularly effective in improving efficiency at the time of start.

Another aspect of the present invention is to provide a compressed air energy storage power generation device including: a motor driven by input power; a compressor driven by the motor to compress air; an accumulator tank configured to accumulate compressed air compressed by the compressor; a plurality of expanders driven by the compressed air supplied from the accumulator tank; a plurality of generators driven by the expanders, respectively, to supply output power to a supply destination; and a control device configured to control driving of the generators, in which the control device includes a discharge command receiver configured to receive a discharge command indicating an amount of the output power required by the supply destination before the output power is supplied, a priority setting unit configured to set first priority to the generators whose elapsed time from stop is shorter than a time period set in advance so that the generator whose elapsed time from stop is shorter has higher priority, and set second priority lower than the first priority to the generators whose elapsed time from stop is equal to or longer than the time period set in advance so that the generator having a smaller total power generation amount has higher priority, a number-of-units determination unit configured to determine the number of the generators to be driven on the basis of the amount of the output power indicated by the discharge command, and a drive unit configured to drive the generators in the descending order of the priority including the first priority and the second priority until the number of the driven generators becomes equal to the number of generators to be driven determined by the number-of-units determination unit.

In this configuration, the generators and expanders whose elapsed time from stop is shorter than the time period set in advance (warm-up maintaining time) are determined to be in a warmed-up state, and the generator and expander that have operated most recently are preferentially driven on the basis of the first priority set by the priority setting unit. Therefore, the generator and expander that can perform hot start more effectively are preferentially driven. This makes it possible to reduce energy required for warming up and improve the power generation efficiency. Meanwhile, among the generators whose elapsed time from stop is equal to or longer than the time period set in advance (warm-up maintaining time), the generator having a smaller total power generation amount is preferentially driven on the basis of the second priority set by the priority setting unit. Thus, differences in operation time between all the generators and between all the expanders can be kept small, and total operation time of the generators and expanders can be leveled. Therefore, the generator and expander that can perform hot start are preferentially driven. This makes it possible to reduce energy and improve the power generation efficiency. Further, operation frequency of each generator and each expander can be leveled.

The priority setting unit may reset the priority in a case where one of the generators is stopped and the number of stopped generators is two or more.

With this configuration, the priority is reset when the number of stopped generators is two. In a case where a discharge command is received before the warm-up maintaining time elapses from this point, one of those two generators which can perform hot start more effectively is preferentially driven. This makes it possible to effectively exhibit the effect of reducing energy and costs required for warming up. The same applies to a case where the number of stopped generators is three or more.

The priority setting unit may reset the priority in a case where all the generators stop.

With this configuration, the priority of the generators and expanders to be restarted is reset in a case where all the generators are stopped. Therefore, the generator and expander that can perform hot start are preferentially driven. This makes it possible to exhibit the effect of reducing energy and costs.

The compressed air energy storage power generation device may further includes: a first heat exchanger configured to exchange heat between the compressed air compressed by the compressors and a heat medium; a high-temperature heat medium tank fluidly connected to the first heat exchanger and configured to store the heat medium supplied from the first heat exchanger; a second heat exchanger fluidly connected to the high-temperature heat medium tank and configured to exchange heat between the heat medium supplied from the high-temperature heat medium tank and the compressed air supplied from the accumulator tank to the expander; and a low-temperature heat medium tank fluidly connected to the first heat exchanger and the second heat exchanger and configured to store the heat medium supplied from the second heat exchanger.

With this configuration, compression heat generated in the compressor can be collected by the first heat exchanger to preheat the compressed air to be supplied to the expander in the second heat exchanger. This makes it possible to improve efficiency of the compressed air energy storage power generation device. Also in order for the first heat exchanger and the second heat exchanger to exhibit their effects, it is necessary to perform warm-up operation for heating the heat exchangers, and the effect of reducing energy required for warming up and improving the charging efficiency, which is an effect of the present invention, is particularly remarkable.

### EFFECT OF THE INVENTION

The present invention can improve operation efficiency by controlling the number of units in a CAES power generation device including a plurality of compressors and motors or a plurality of expanders and generators.

### BRIEF DESCRIPTION OF THE DRAWINGS

Fig. 1 is a schematic configuration diagram of a CAES power generation device according to an embodiment of the present invention.
Fig. 2 is a flowchart showing a specific example of a method of controlling motors and compressors of a CAES power generation device according to an embodiment of the present invention.
Fig. 3 is a flowchart showing another specific example of a method of controlling motors and compressors of a CAES power generation device according to an embodiment of the present invention.
Fig. 4 is a flowchart showing a specific example of a method of determining priority of motors by using a control device of a CAES power generation device according to an embodiment of the present invention.
Fig. 5 is a flowchart showing another specific example of a method of determining priority of motors by using a control device of a CAES power generation device according to an embodiment of the present invention.
Fig. 6 is a flowchart showing a specific example of a method of controlling expanders and generators of a CAES power generation device according to an embodiment of the present invention.
Fig. 7 is a flowchart showing another specific example of a method of controlling expanders and generators of a CAES power generation device according to an embodiment of the present invention.
Fig. 8 is a flowchart showing a specific example of a method of determining priority of generators by using a control device of a CAES power generation device according to an embodiment of the present invention.
Fig. 9 is a flowchart showing another specific example of a method of determining priority of generators by using a control device of a CAES power generation device according to an embodiment of the present invention.

### MODE FOR CARRYING OUT THE INVENTION

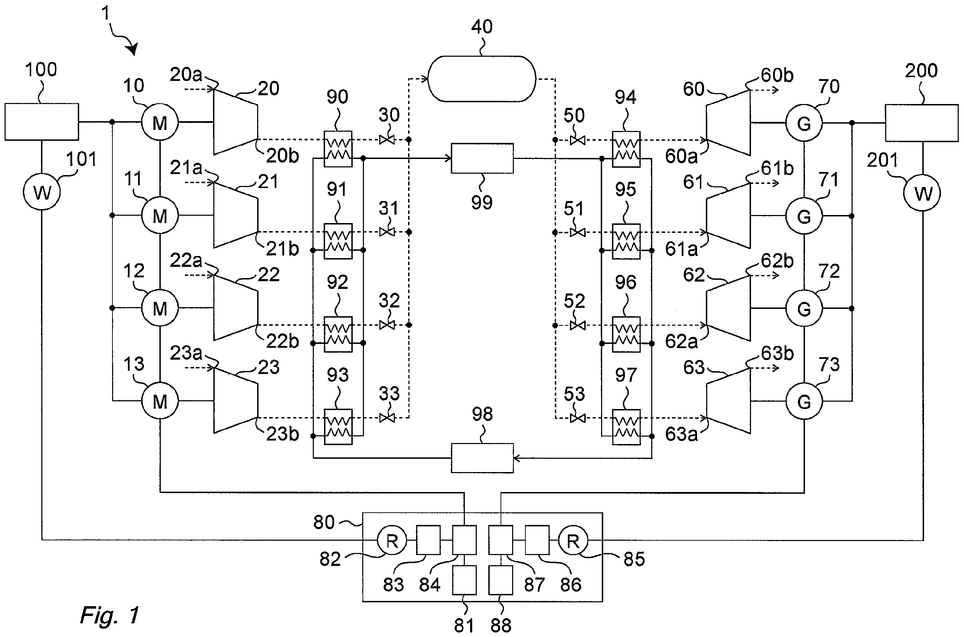

Fig. 1 is a schematic configuration diagram of a compressed air energy storage (CAES) power generation device 1 according to an embodiment of the present invention. The CAES power generation device 1 stores power supplied from power generation facility 100 as compressed air (hereinafter, referred to as "charging"), generates power by using this compressed air as necessary, and supplies the power to a supply destination 200 such as a factory (hereinafter, referred to as "discharging"). The power generation facility 100 is, for example, equipment for power generation using renewable energies, such as wind power generation and solar power generation.

The power generation facility 100 includes a power supply command transmitter 101. The power supply command transmitter 101 transmits a power supply command to the CAES power generation device 1. Herein, the power supply command is a command indicating an amount of power input to the CAES power generation device 1 from the power generation facility 100 to be used for energy storage (hereinafter, referred to as "input power"). The power supply command transmitter 101 may be installed at a place other than the power generation facility 100 in a power system such as a substation.

The supply destination 200 includes a discharge command transmitter 201. The discharge command transmitter 201 transmits a discharge command to the CAES power generation device 1. Herein, the discharge command is a command indicating an amount of power that the supply destination 200 requires from the CAES power generation device 1 (hereinafter, referred to as "output power").

In Fig. 1, the CAES power generation device 1 includes motors 10 to 13 driven by the input power and compressors 20 to 23 driven by the motors 10 to 13, respectively, to compress air. The compressors 20 to 23 include suction ports 20a, 21a, 22a, and 23a, respectively, for taking in outside air, and discharge ports 20b, 21b, 22b, and 23b, respectively, for discharging compressed air compressed by the compressors 20 to 23.

The compressors 20 to 23 are screw, turbo, scroll, reciprocating, or other types of compressors. The compressors 20 to 23 are preferably screw compressors. This is because screw compressors can generally control a rotational speed of a screw rotor, and can therefore flexibly respond to irregularly changing input power.

The CAES power generation device 1 further includes an accumulator tank 40. The discharge ports 20b, 21b, 22b, and 23b are fluidly connected to the accumulator tank 40 via valves 30, 31, 32, and 33, respectively. The compressed air compressed by the compressors 20 to 23 and discharged from the discharge ports 20b, 21b, 22b, and 23b is stored in the accumulator tank 40.

The CAES power generation device 1 further includes expanders 60 to 63 driven by the compressed air supplied from the accumulator tank 40 and generators 70 to 73 driven by the expanders 60 to 63, respectively, to supply the output power to the supply destination 200. The expanders 60 to 63 are fluidly connected to the accumulator tank 40, and include suction ports 60a, 61a, 62a, and 63a, respectively, for taking in the compressed air supplied from the accumulator 40 and discharge ports 60b, 61b, 62b, and 63b, respectively, for discharging air expanded by the expanders 60 to 63. Valves 50, 51, 52, and 53 for adjusting a flow rate of the compressed air supplied from the accumulator tank 40 are provided on an upstream side of the suction ports 60a, 61a, 62a, and 63a, respectively.

The expanders 60 to 63 are screw, turbo, scroll, reciprocating, or other types of expanders, and are preferably screw expanders.

The CAES power generation device 1 further includes a control device 80. The control device 80 is electrically connected to at least the motors 10 to 13, the valves 30 to 33, the valves 50 to 53, and the generators 70 to 73. Further, the control device 80 includes a power supply command receiver 82 that receives a power supply command transmitted from the power supply command transmitter 101 and a discharge command receiver 85 that receives a discharge command transmitted from the discharge command transmitter 201. Note that, in Fig. 1, lines connecting the control device 80 to the valves 30 to 33 and the valves 50 to 53 are omitted in order to prevent the drawing from being complicated. The control device 80 includes, for example, hardware including a CPU, a RAM, a ROM, and the like and software mounted thereon.

The CAES power generation device 1 includes first heat exchangers 90 to 93 for exchanging heat between the compressed air compressed by the respective compressors 20 to 23 and a heat medium. The CAES power generation device 1 further includes a high-temperature heat medium tank 99 that is fluidly connected to the first heat exchangers 90 to 93 and stores the heat medium supplied from the first heat exchangers 90 to 93. The CAES power generation device 1 further includes second heat exchangers 94 to 97 that are fluidly connected to the high-temperature heat medium tank 99 and exchange heat between the heat medium supplied from the high-temperature heat medium tank 99 and the compressed air supplied from the accumulator tank 40 to the respective expanders 60 to 63. The CAES power generation device 1 further includes a low-temperature heat medium tank 98 that is fluidly connected to the first heat exchangers 90 to 93 and the second heat exchangers 94 to 97 and stores the heat medium supplied from the second heat exchangers 94 to 97. A pump (not illustrated) for circulating the heat medium is provided on a heat medium path. The heat medium is, for example, water or oil, but is not limited thereto.

The number of the first heat exchangers 90 to 93 and the second heat exchangers 94 to 97 is four in Fig. 1, but is not limited thereto.

In the above description, a specific example of the CAES power generation device 1 including four motors, compressors, expanders, and generators has been described, but the number of motors, compressors, expanders, and generators is not limited thereto.

Next, compression operation of the CAES power generation device 1 will be described.

In the CAES power generation device 1, one or more of the motors 10 to 13 are driven by input power, and the corresponding ones of the compressors 20 to 23 are driven to compress air. The number of motors 10 to 13 and compressors 20 to 23 to be driven (the number of driven compressors) is determined by a number-of-driven-compressors determination unit 83 of the control device 80 on the basis of a power supply command indicating an amount of the input power. When the number of units to perform compression is determined, a compression driver 84 of the control device 80 starts or stops the motors 10 to 13 until the number of the operating motors 10 to 13 becomes equal to the determined number of units to perform compression. Which of the motors 10 to 13 is to be started or stopped is determined on the basis of priority set in advance by a compressor priority setting unit 81 of the control device 80.

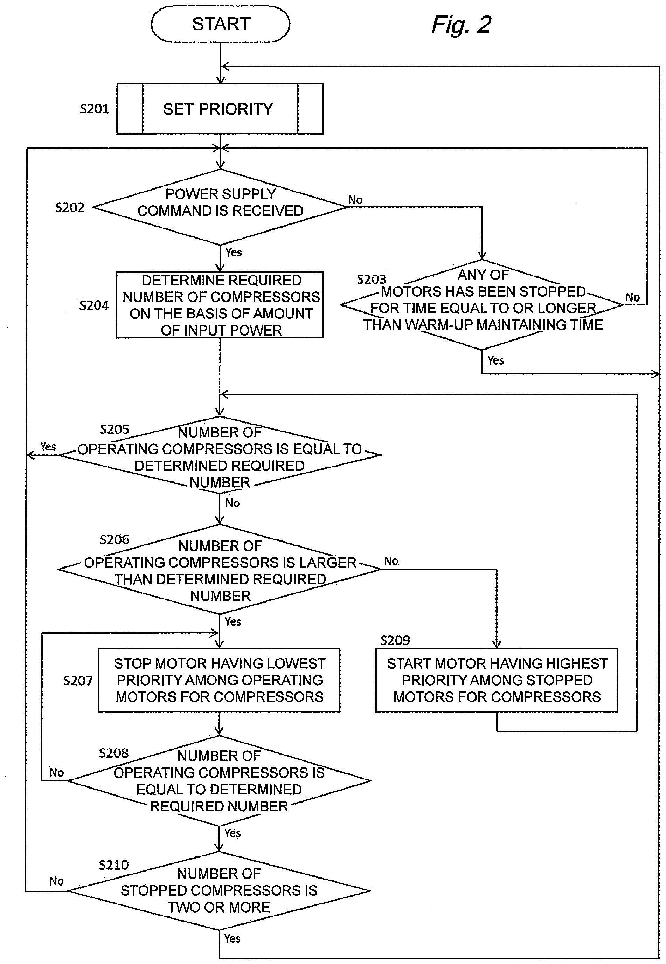

Specific operation flows of the motors 10 to 13 and the compressors 20 to 23 will be described. Fig. 2 is a flowchart showing a specific example of a method of controlling the motors 10 to 13 and the compressors 20 to 23. First, in step S201, the compressor priority setting unit 81 of the control device 80 sets priority to each of the motors 10 to 13 and each of the compressors 20 to 23. A method of determining the priority by the compressor priority setting unit 81 will be described later.

In the next step S202, the control device 80 determines whether or not the power supply command receiver 82 has received a power supply command transmitted from the power supply command transmitter 101. When a result of the determination in step S202 is No, the process proceeds to step S203. When the result of the determination is Yes, the process proceeds to step S204.

In step S203, the control device 80 determines whether or not any of the motors 10 to 13 for the compressors 20 to 23 has been stopped for a time equal to or longer than a warm-up maintaining time T set in advance. The warm-up maintaining time T is, for example, ten minutes. When a result of the determination in step S203 is Yes, the process returns to step S201. When the result of the determination in step S203 is No, the process returns to step S202. As described above, the control device 80 waits for reception of the power supply command in principle. However, when no power supply command has been received and one or more of the motors 10 to 13 for the compressors 20 to 23 have been stopped for a time equal to or longer than the warm-up maintaining time T, it is determined that the stopped compressors 20 to 23 are no longer in a warmed-up state, and the priority is reset.

When a power supply command is received, in step S204, the number-of-driven-compressors determination unit 83 of the control device 80 determines the required number of compressors 20 to 23 to operate on the basis of the amount of the input power indicated by the power supply command.

In the next step S205, the control device 80 determines whether or not the number of currently operating compressors 20 to 23 is equal to the required number determined in step S204. When a result of step S205 is Yes, there is no need to change the number of compressors 20 to 23 (i.e., start the stopped compressors 20 to 23 or stop the operating compressors 20 to 23), and thus the process returns to step S202. When the result of step S205 is No, the process proceeds to step S206.

In step S206, the control device 80 determines whether or not the number of currently operating compressors 20 to 23 is larger than the required number determined in step S204. When a result of step S206 is Yes, the compression driver 84 of the control device 80 stops the motors 10 to 13 until the number of currently operating compressors 20 to 23 becomes equal to the required number determined in step S204. Specifically, when the result of step S206 is Yes, for example, the compression driver 84 of the control device 80 stops one of the currently operating motors 10 to 13 for the compressors 20 to 23, i.e., for example, stops a motor having the lowest priority (step S207). Then, whether or not the number of currently operating compressors 20 to 23 is equal to the required number determined in step S204 is determined again (step S208). When a result of step S208 is No, the process returns to step S207. Steps S207 and S208 are repeated until the number of currently operating compressors 20 to 23 becomes equal to the required number determined in step S204. When the result of step S208 is Yes, the process proceeds to step S210.

When the result of step S206 is No, the compression driver 84 of the control device 80 starts the currently stopped motors 10 to 13 until the number of currently operating compressors 20 to 23 becomes equal to the required number determined in step S204. Specifically, when the result of step S206 is No, the compression driver 84 of the control device 80 starts a motor having the highest priority among the currently stopped motors 10 to 13 (step S209). Then, the process returns to step S205.

In step S210, the control device 80 determines whether or not the number of currently stopped compressors 20 to 23 is two or more. When a result of step S210 is Yes, i.e., when one of the motors 10 to 13 has been stopped (step S207) and the number of stopped motors is two or more, the process returns to step S201, and the priority is reset. When the result of step S210 is No, the process returns to step S202, and the priority is not reset.

Note that Figs. 2, 3, 6, and 7 include an infinite loop. However, those drawings show merely a main part of the flowcharts for describing the operation of the control device, and, in an actual control program, the process shifts to another control program after the priority is determined.

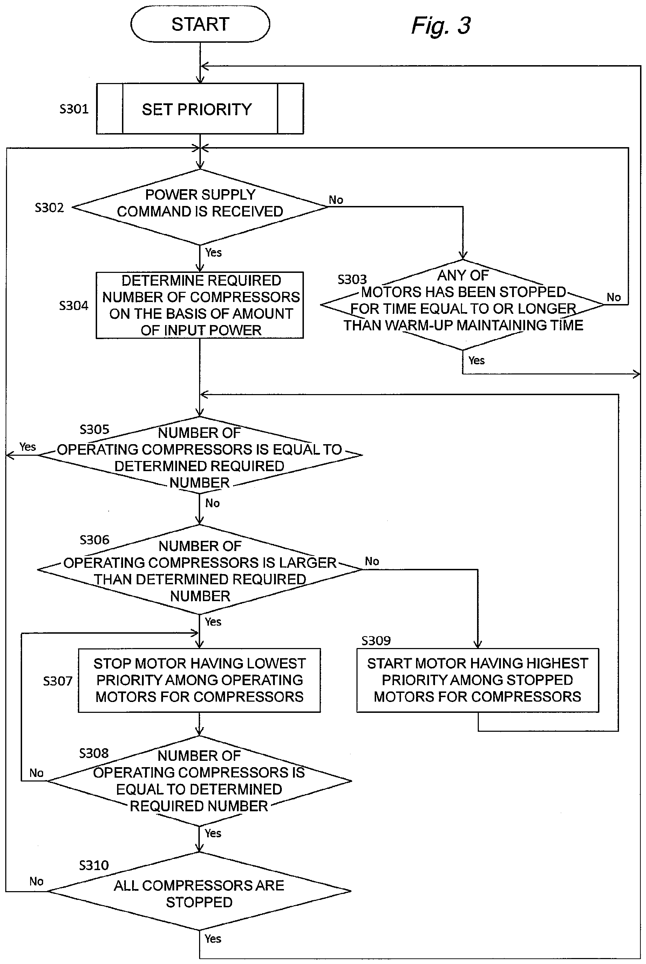

Fig. 3 is a flowchart showing another specific example of the method of controlling the motors 10 to 13 and the compressors 20 to 23. Instead of step S210, whether or not all the compressors 20 to 23 are stopped may be determined in step S310. When a result of step S310 is Yes, i.e., when all the motors 10 to 13 are stopped, the process returns to step S301, and the priority is reset. When the result of step S310 is No, the process returns to step S302, and the priority is not reset.

Next, a method of determining the priority of the motors 10 to 13 by the compressor priority setting unit 81 of the control device 80 will be described.

Priority numbers 1 to 4 are set to the motors 10 to 13, respectively. Generally, in a case where there are N motors, priority numbers 1 to N are set to the motors, respectively. "1" indicates the highest priority, and the priority becomes lower as the number increases. The same priority number is not set to a plurality of motors.

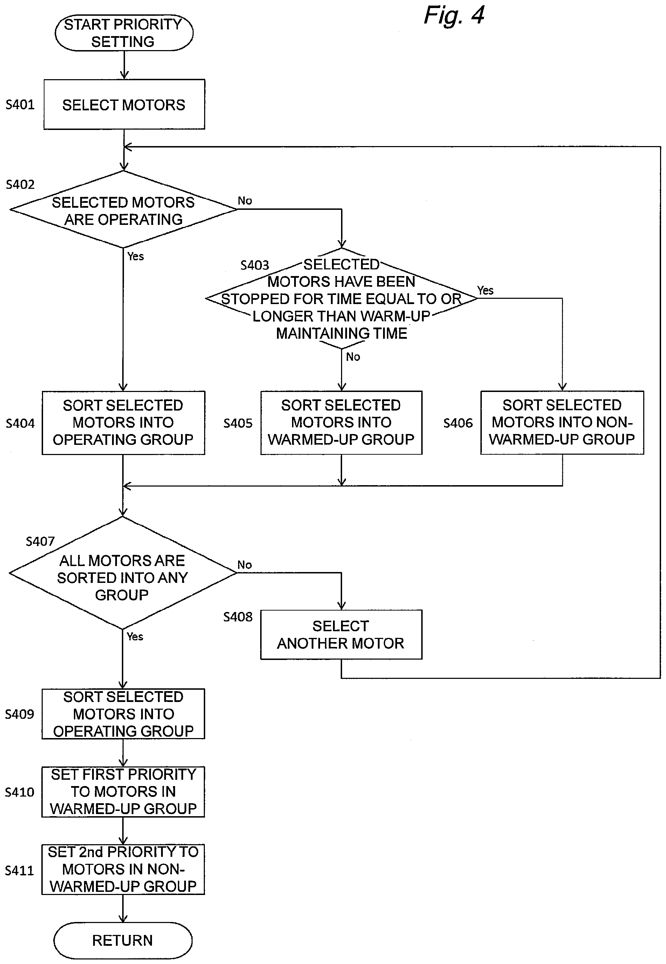

Fig. 4 is a flowchart showing a specific example of the method of determining the priority of the motors 10 to 13 (steps S201 and S301) by the compressor priority setting unit 81 of the control device 80.

First, the compressor priority setting unit 81 of the control device 80 sorts the motors 10 to 13 into one of an operating group, a warmed-up group, and a non-warmed-up group (steps S401 to S408). Among the motors 10 to 13, currently operating motors are sorted into the operating group (steps S402 and S404). Among the other motors 10 to 13, motors that have been stopped for a time shorter than the warm-up maintaining time T are determined to be in a warmed-up state and are therefore sorted into the warmed-up group (steps S403 and S405). The other motors 10 to 13, i.e., the motors 10 to 13 that have been stopped for a time equal to or longer than the warm-up maintaining time T are sorted into the non-warmed-up group (step S406).

Next, the priority is set to the motors 10 to 13 sorted into the operating group (step S409). However, the priority to be set to the motors in the operating group is the same as the previous priority. That is, the priority of the motors in the operating group is maintained.

Next, first priority is set to the motors sorted into the warmed-up group among the motors 10 to 13 so that a motor whose elapsed time from stop is shorter has higher priority (step S410). However, the priority set to the motors in the operating group is excluded from the first priority.

Next, second priority is set to the motors sorted into the non-warmed-up group among the motors 10 to 13 so that a motor having a smaller total power consumption amount has higher priority (step S411). The second priority is lower than the first priority. Further, the priority set to the motors in the operating group is excluded from the second priority. As described above, in step S411, the second priority lower than the first priority is set to the motors 10 to 13 so that a motor having a smaller total power consumption amount has higher priority.

Generally, in a case where lubricating oil has a high viscosity due to a low temperature at the time of the start of the compressors 20 to 23, high power is required to operate a pump for lubricating the lubricating oil. Further, in a case where parts of the motors 10 to 13 and the compressors 20 to 23 are at a low temperature, those parts cannot smoothly operate, and thus the motors 10 to 13 and the compressors 20 to 23 cannot exhibit their original performance. Therefore, in order to heat the lubricating oil to reduce the viscosity and improve fluidity, and also to cause the motors 10 to 13 and the compressors 20 to 23 to exhibit their original performance, it is necessary to perform warm-up operation of the motors 10 to 13 and the compressor 20 to 23. In order to perform the warm-up operation, a large amount of power is required for heating. Further, if warming up is completed in a short time, a large capacity or a large number of lubricating oil heaters are required. This increases costs.

In the CAES power generation device 1 of the present invention, among the motors 10 to 13 and the compressors 20 to 23 that have been stopped for a time shorter than the warm-up maintaining time T, the most recently operated motor and compressor are preferentially driven. Therefore, the motors 10 to 13 and the compressors 20 to 23 that can perform hot start more effectively are preferentially driven. This makes it possible to reduce energy and costs required for warming up. Meanwhile, among the motors that have been stopped for a time equal to or longer than the warm-up maintaining time T, a motor having a smaller total power consumption amount is preferentially driven. Thus, differences in operation time between all the motors 10 to 13 and between all the compressors 20 to 23 can be kept small, and total operation time of both the motors and compressors can be leveled. Therefore, by preferentially driving the motor and compressor that can perform hot start, it is possible to reduce energy and costs and level operation frequency of the motors 10 to 13 and the compressors 20 to 23. Leveling the operation frequency can level a life of each of the motors 10 to 13 and each of the compressors 20 to 23.

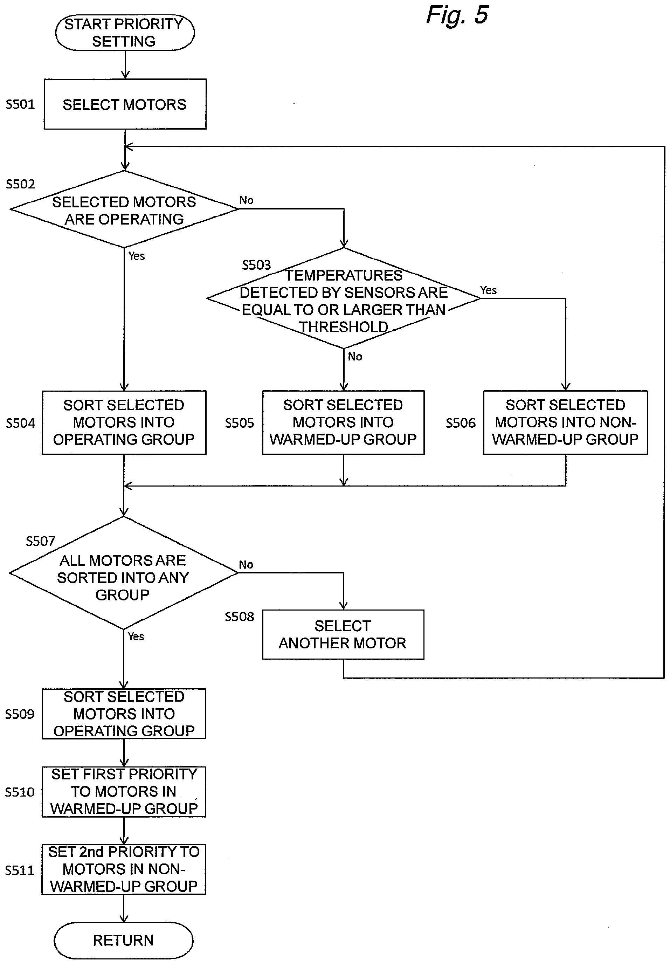

Fig. 5 is a flowchart showing another specific example of the method of determining the priority of the motors 10 to 13 (steps S201 and S301) by the compressor priority setting unit 81 of the control device 80. In this specific example, whether or not the motors 10 to 13 have been warmed up is determined on the basis of temperatures detected by temperature sensors (not illustrated) attached to the first heat exchangers 90 to 93, the compressors 20 to 23, pipes thereof, or the like. Specifically, instead of step S403, whether or not the temperatures detected by the temperature sensors are equal to or higher than a threshold is determined in step S503. When a result of the determination is Yes, the process proceeds to step S505, and, when the result of the determination is No, the process proceeds to step S506. By determining whether or not warming up has been completed on the basis of the temperatures instead of the warm-up maintaining time T, it is possible to preferentially start the motors 10 to 13 and the compressors 20 to 23 that can perform hot start more reliably.

Next, expansion (power generation) operation of the CAES power generation device 1 will be described.

In the CAES power generation device 1, one or more of the expanders 60 to 63 are driven by compressed air supplied from the accumulator tank 40, and the corresponding ones of the generators 70 to 73 are driven to generate power. The number of the expanders 60 to 63 and the generators 70 to 73 to be driven (the number of driven generators) is determined by a number-of-driven-generators determination unit 86 of the control device 80 on the basis of a discharge command indicating an amount of the output power. When the number of units to generate power is determined, a power generation driver 87 of the control device 80 starts or stops the expanders 60 to 63 and the generators 70 to 73 until the number of operating generators 70 to 73 becomes equal to the determined number of units to generate power. Which of the expanders 60 to 63 and the generators 70 to 73 is to be started or stopped is determined on the basis of priority set in advance by a generator priority setting unit 88 of the control device 80.

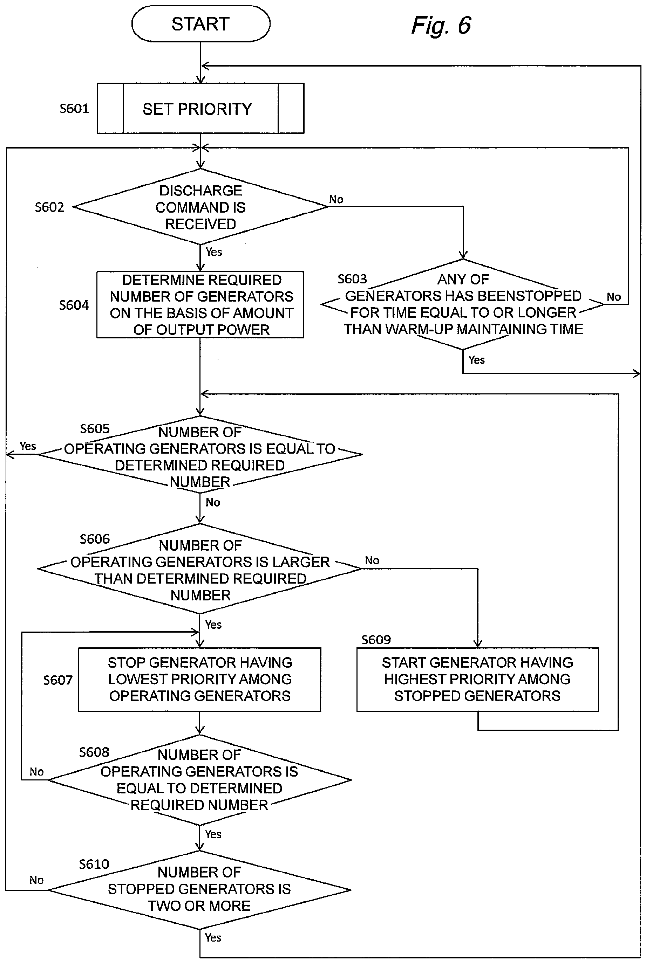

A specific operation flow of the expanders 60 to 63 and the generators 70 to 73 will be described. Fig. 6 is a flowchart showing a specific example of a method of controlling the expanders 60 to 63 and the generators 70 to 73. First, in step S601, the generator priority setting unit 88 of the control device 80 sets priority to each of the expanders 60 to 63 and each of the generators 70 to 73. A method of determining the priority by the generator priority setting unit 88 will be described later.

In the next step S602, the control device 80 determines whether or not the discharge command receiver 85 has received a discharge command transmitted from the discharge command transmitter 201. When a result of the determination in step S602 is No, the process proceeds to step S603. When the result of the determination is Yes, the process proceeds to step S604.

In step S603, the control device 80 determines whether or not any of the generators 70 to 73 has been stopped for a time equal to or longer than a warm-up maintaining time U set in advance. The warm-up maintaining time U is, for example, ten minutes. When a result of the determination in step S603 is Yes, the process returns to step S601, and, when the result of the determination is No, the process returns to step S602. As described above, the control device 80 waits for reception of the discharge command in principle. However, when no discharge command has been received and one or more of the generators 70 to 73 have been stopped for a time equal to or longer than the warm-up maintaining time U, it is determined that the stopped generators 70 to 73 are no longer in a warmed-up state, and the priority is reset.

When a discharge command is received, in step S604, the number-of-driven-generators determination unit 86 of the control device 80 determines the required number of generators 70 to 73 to operate on the basis of the amount of the output power indicated by the discharge command.

In the next step S605, the control device 80 determines whether or not the number of currently operating generators 70 to 73 is equal to the required number determined in step S604. When a result of step S605 is Yes, there is no need to change the number of generators 70 to 73 (i.e., start the stopped generators 70 to 73 or stop the operating generators 70 to 73), and thus the process returns to step S602. When the result of step S605 is No, the process proceeds to step S606.

In step S606, the control device 80 determines whether or not the number of currently operating generators 70 to 73 is larger than the required number determined in step S604. When a result of step S606 is Yes, the power generation driver 87 of the control device 80 stops the expanders 60 to 63 and the generators 70 to 73 until the number of currently operating generators 70 to 73 becomes equal to the required number determined in step S604. Specifically, when the result of step S606 is Yes, for example, the power generation driver 87 of the control device 80 stops one of the currently operating generators 70 to 73, i.e., for example, stops a generator having the lowest priority (step S607). Then, whether or not the number of currently operating generators 70 to 73 is equal to the required number determined in step S604 is determined again (step S608). When a result of step S608 is No, the process returns to step S607. Steps S607 and S608 are repeated until the number of currently operating generators 70 to 73 becomes equal to the required number determined in step S604. When the result of step S608 is Yes, the process proceeds to step S610.

When the result of step S606 is No, the power generation driver 87 of the control device 80 starts the currently stopped generators 70 to 73 until the number of currently operating generators 70 to 73 becomes equal to the required number determined in step S604. Specifically, when the result of step S606 is No, the power generation driver 87 of the control device 80 starts a generator having the highest priority among the currently stopped generators 70 to 73 (step S609). Then, the process returns to step S605.

In step S610, the control device 80 determines whether or not the number of currently stopped generators 70 to 73 is two or more. When a result of step S610 is Yes, i.e., when one of the generators 70 to 73 is stopped (step S607) and the number of stopped generators is two or more, the process returns to step S601, and the priority is reset. When the result of step S610 is No, the process returns to step S602, and the priority is not reset.

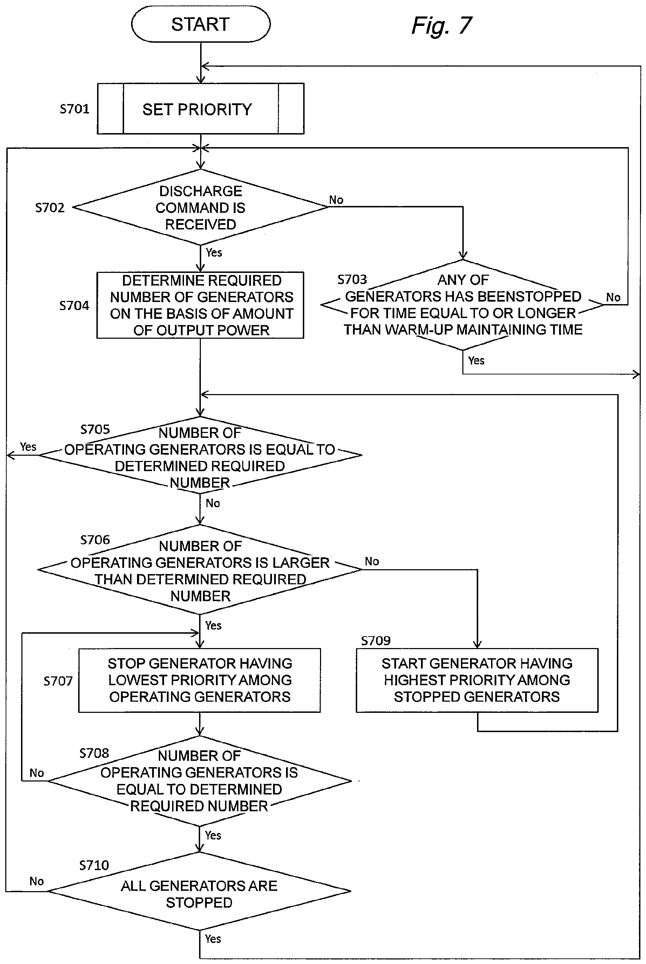

Fig. 7 is a flowchart showing another specific example of the method of controlling the expanders 60 to 63 and the generators 70 to 73. Instead of step S610, whether or not all the generators 70 to 73 are stopped may be determined in step S710. When a result of step S710 is Yes, i.e., when all the generators 70 to 73 are stopped, the process returns to step S701, and the priority is reset. When the result of step S710 is No, the process returns to step S702, and the priority is not reset.

Next, a method of determining the priority of the generators 70 to 73 by the generator priority setting unit 88 of the control device 80 will be described.

Priority numbers 1 to 4 are set to the generators 70 to 73, respectively. Generally, in a case where there are M generators, priority numbers 1 to M are set to the generators, respectively. The same priority number is not set to a plurality of generators.

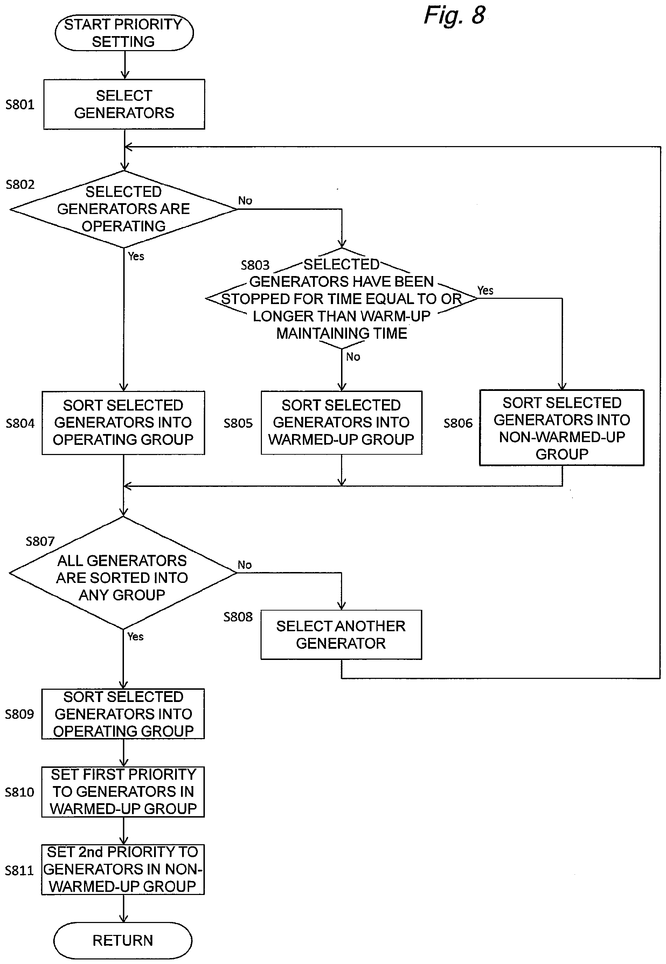

Fig. 8 is a flowchart showing a specific example of the method of determining the priority of the generators 70 to 73 (steps S601 and S701) by the generator priority setting unit 88 of the control device 80.

First, the generator priority setting unit 88 of the control device 80 sorts the generators 70 to 73 into one of an operating group, a warmed-up group, and a non-warmed-up group (steps S801 to S808). Among the generators 70 to 73, currently operating generators are sorted into the operating group (steps S802 and S804). Among the other generators 70 to 73, generators that have been stopped for a time shorter than the warm-up maintaining time U are determined to be in a warmed-up state and are therefore sorted into the warmed-up group (steps S803 and S805). The other generators 70 to 73, i.e., the generators 70 to 73 that have been stopped for a time equal to or longer than the warm-up maintaining time U are sorted into the non-warmed-up group (step S806).

Next, the priority is set to the generators 70 to 73 sorted into the operating group (step S809). However, the priority to be set to the generators in the operating group is the same as the previous priority. That is, the priority of the generators in the operating group is maintained.

Next, first priority is set to the generators sorted into the warmed-up group among the generators 70 to 73 so that a generator whose elapsed time from stop is shorter has higher priority (step S810). However, the priority set to the generators in the operating group is excluded from the first priority.

Next, second priority is set to the generators sorted into the non-warmed-up group among the generators 70 to 73 so that a generator having a smaller total power generation amount has higher priority (step S811). The second priority is lower than the first priority. Further, the priority set to the generators in the operating group is excluded from the second priority. As described above, in step S811, the second priority lower than the first priority is set to the generators 70 to 73 so that a generator having a smaller total power generation amount has higher priority.

Thus, among the expanders 60 to 63 and the generators 70 to 73 that have been stopped for a time shorter than the warm-up maintaining time U, the most recently operated expander and generator are preferentially driven. Therefore, the expanders 60 to 63 and the generators 70 to 73 that can perform hot start more effectively are preferentially driven. This makes it possible to reduce energy and costs required for warming up. Meanwhile, among the generators that have been stopped for a time equal to or longer than the warm-up maintaining time U, a generator having a smaller total power generation amount is preferentially driven. Thus, differences in operation time between all the generators 70 to 73 and between all the expanders 60 to 63 can be kept small, and total operation time of both the generators and expanders can be leveled. Therefore, by preferentially driving the generator and expander that can perform hot start, it is possible to reduce energy and costs and level operation frequency of the generators 70 to 73 and the expanders 60 to 63. Leveling the operation frequency can level a life of each of the generators 70 to 73 and each of the expanders 60 to 63.

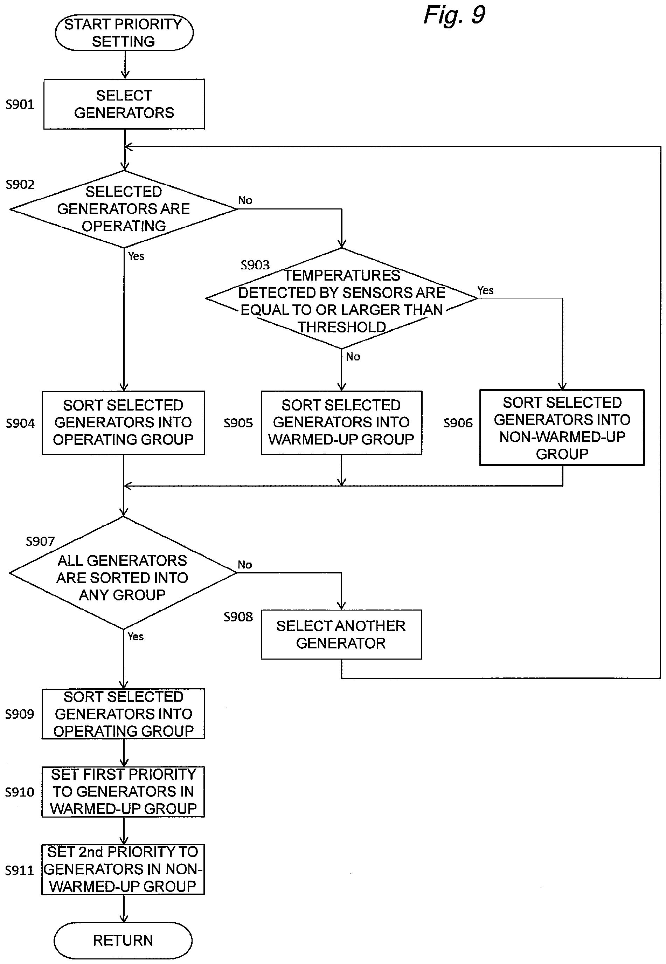

Fig. 9 is a flowchart showing another specific example of the method of determining the priority of the generators 70 to 73 (steps S601 and S701) by the generator priority setting unit 88 of the control device 80. In this specific example, whether or not the generators 70 to 73 have been warmed up is determined on the basis of temperatures detected by temperature sensors (not illustrated) attached to the second heat exchangers 94 to 97, the expanders 60 to 63, pipes thereof, or the like. Specifically, instead of step S803, whether or not the temperatures detected by the temperature sensors are equal to or higher than a threshold is determined in step S903. When a result of the determination is Yes, the process proceeds to step S905, and, when the result of the determination is No, the process proceeds to step S906. By determining whether or not warming up has been completed on the basis of the temperatures instead of the warm-up maintaining time U, it is possible to preferentially start the expanders 60 to 63 and the generators 70 to 73 that can perform hot start more reliably.

In the above embodiment, the power generation facility 100 is assumed to fluctuate by using renewable energies, but a power supply is not necessarily need to fluctuate. The power generation facility may receive a general stable commercial power supply as input and respond to fluctuation of the supply destination 200. In this case, contract power of the commercial power supply can be reduced by cutting a peak of the supply destination 200.

Further, in the above embodiment, there has been described an example in which the compressors 20 to 23 and the motors 10 to 13 and the expanders 60 to 63 and the generators 70 to 73 are physically different. However, in particular, the compressors 20 to 23 and the expanders 60 to 63 of this embodiment are the same. Thus, the compressors may also serve as the expanders, and the motors may also serve as the generators. In this case, it is possible to use a compressor driven by a motor generator that can reversibly become a motor and a generator. That is, the present invention is also applicable to a compressor that is used as a compressor driven by a motor generator during charging (accumulation) and is used as an expander reversely rotated to drive the motor generator during power generation.

### DESCRIPTION OF SYMBOLS

1 Compressed air energy storage (CAES) generation device
10 to 13 Motor
20 to 23 Compressor
30 to 33 Valve
40 Accumulator tank
50 to 53 Valve
60 to 63 Expander
70 to 73 Generator
80 Control device
81 Compressor priority setting unit
82 Power supply command receiver
83 Number-of-units-to-perform-compression determination unit
84 Compression driver
85 Discharge command receiver
86 Number-of-units-to-generate-power determination unit
87 Power generation driver
88 Generator priority setting unit
90 to 93 First heat exchanger
94 to 97 Second heat exchanger
98 Low-temperature heat medium tank
99 High-temperature heat medium tank
100 Power generation facility
101 Power supply command transmitter
200 Supply destination
201 Discharge command transmitter

## Claims

1. A compressed air energy storage power generation device, comprising:
a plurality of motors driven by input power;
a plurality of compressors driven by the motors, respectively, to compress air;
an accumulator tank configured to accumulate compressed air compressed by the compressors;
an expander driven by the compressed air supplied from the accumulator tank;
a generator driven by the expander to supply output power to a supply destination; and
a control device configured to control driving of the motors, wherein
the control device includes
a power supply command receiver configured to receive a power supply command indicating an amount of the input power before the input power is supplied,
a priority setting unit configured to set priority to the motors so that the motor whose elapsed time from stop is shorter has higher priority,
a number-of-units determination unit configured to determine the number of the motors to be driven on the basis of the amount of the input power indicated by the power supply command, and
a drive unit configured to drive the motors in the descending order of the priority until the number of the driven motors becomes equal to the number of motors to be driven determined by the number-of-units determination unit.

2. A compressed air energy storage power generation device, comprising:
a plurality of motors driven by input power;
a plurality of compressors driven by the motors, respectively, to compress air;
an accumulator tank configured to accumulate compressed air compressed by the compressors;
an expander driven by the compressed air supplied from the accumulator tank;
a generator driven by the expander to supply output power to a supply destination; and
a control device configured to control driving of the motors, wherein
the control device includes
a power supply command receiver configured to receive a power supply command indicating an amount of the input power before the input power is supplied,
a priority setting unit configured to set first priority to the motors whose elapsed time from stop is shorter than a time period set in advance so that the motor whose elapsed time from stop is shorter has higher priority, and set second priority lower than the first priority to the motors whose elapsed time from stop is equal to or longer than the time period set in advance so that the motor having a smaller total power consumption amount has higher priority,
a number-of-units determination unit configured to determine the number of the motors to be driven on the basis of the amount of the input power indicated by the power supply command, and
a drive unit configured to drive the motors in the descending order of the priority including the first priority and the second priority until the number of the driven motors becomes equal to the number of motors to be driven determined by the number-of-units determination unit.

3. The compressed air energy storage power generation device according to claim 1 or 2, wherein
the priority setting unit resets the priority in a case where one of the motors is stopped and the number of stopped motors is two or more.

4. The compressed air energy storage power generation device according to claim 1 or 2, wherein
the priority setting unit resets the priority in a case where all the motors stop.

5. A compressed air energy storage power generation device, comprising:
a motor driven by input power;
a compressor driven by the motor to compress air;
an accumulator tank configured to accumulate compressed air compressed by the compressor;
a plurality of expanders driven by the compressed air supplied from the accumulator tank;
a plurality of generators driven by the expanders, respectively, to supply output power to a supply destination; and
a control device configured to control driving of the generators, wherein
the control device includes
a discharge command receiver configured to receive a discharge command indicating an amount of the output power required by the supply destination before the output power is supplied,
a priority setting unit configured to set priority to the generators so that the generator whose elapsed time from stop is shorter has higher priority,
a number-of-units determination unit configured to determine the number of the generators to be driven on the basis of the amount of the output power indicated by the discharge command, and
a drive unit configured to drive the generators in the descending order of the priority until the number of the driven generators becomes equal to the number of generators to be driven determined by the number-of-units determination unit.

6. A compressed air energy storage power generation device, comprising:
a motor driven by input power;
a compressor driven by the motor to compress air;
an accumulator tank configured to accumulate compressed air compressed by the compressor;
a plurality of expanders driven by the compressed air supplied from the accumulator tank;
a plurality of generators driven by the expanders, respectively, to supply output power to a supply destination; and
a control device configured to control driving of the generators, wherein
the control device includes
a discharge command receiver configured to receive a discharge command indicating an amount of the output power required by the supply destination before the output power is supplied,
a priority setting unit configured to set first priority to the generators whose elapsed time from stop is shorter than a time period set in advance so that the generator whose elapsed time from stop is shorter has higher priority, and set second priority lower than the first priority to the generators whose elapsed time from stop is equal to or longer than the time period set in advance so that the generator having a smaller total power generation amount has higher priority,
a number-of-units determination unit configured to determine the number of the generators to be driven on the basis of the amount of the output power indicated by the discharge command, and
a drive unit configured to drive the generators in the descending order of the priority including the first priority and the second priority until the number of the driven generators becomes equal to the number of generators to be driven determined by the number-of-units determination unit.

7. The compressed air energy storage power generation device according to claim 5 or 6, wherein
the priority setting unit resets the priority in a case where one of the generators is stopped and the number of stopped generators is two or more.

8. The compressed air energy storage power generation device according to claim 5 or 6, wherein
the priority setting unit resets the priority in a case where all the generators stop.

9. The compressed air energy storage power generation device according to any one of claims 1, 2, 5, and 6, further comprising:
a first heat exchanger configured to exchange heat between the compressed air compressed by the compressor and a heat medium;
a high-temperature heat medium tank fluidly connected to the first heat exchanger and configured to store the heat medium supplied from the first heat exchanger;
a second heat exchanger fluidly connected to the high-temperature heat medium tank and configured to exchange heat between the heat medium supplied from the high-temperature heat medium tank and the compressed air supplied from the accumulator tank to the expander; and
a low-temperature heat medium tank fluidly connected to the first heat exchanger and the second heat exchanger and configured to store the heat medium supplied from the second heat exchanger.

10. The compressed air energy storage power generation device according to claim 3, further comprising:
a first heat exchanger configured to exchange heat between the compressed air compressed by the compressors and a heat medium;
a high-temperature heat medium tank fluidly connected to the first heat exchanger and configured to store the heat medium supplied from the first heat exchanger;
a second heat exchanger fluidly connected to the high-temperature heat medium tank and configured to exchange heat between the heat medium supplied from the high-temperature heat medium tank and the compressed air supplied from the accumulator tank to the expander; and
a low-temperature heat medium tank fluidly connected to the first heat exchanger and the second heat exchanger and configured to store the heat medium supplied from the second heat exchanger.

11. The compressed air energy storage power generation device according to claim 4, further comprising:
a first heat exchanger configured to exchange heat between the compressed air compressed by the compressors and a heat medium;
a high-temperature heat medium tank fluidly connected to the first heat exchanger and configured to store the heat medium supplied from the first heat exchanger;
a second heat exchanger fluidly connected to the high-temperature heat medium tank and configured to exchange heat between the heat medium supplied from the high-temperature heat medium tank and the compressed air supplied from the accumulator tank to the expander; and
a low-temperature heat medium tank fluidly connected to the first heat exchanger and the second heat exchanger and configured to store the heat medium supplied from the second heat exchanger.

12. The compressed air energy storage power generation device according to claim 7, further comprising:
a first heat exchanger configured to exchange heat between the compressed air compressed by the compressor and a heat medium;
a high-temperature heat medium tank fluidly connected to the first heat exchanger and configured to store the heat medium supplied from the first heat exchanger;
a second heat exchanger fluidly connected to the high-temperature heat medium tank and configured to exchange heat between the heat medium supplied from the high-temperature heat medium tank and the compressed air supplied from the accumulator tank to the expanders; and
a low-temperature heat medium tank fluidly connected to the first heat exchanger and the second heat exchanger and configured to store the heat medium supplied from the second heat exchanger.

13. The compressed air energy storage power generation device according to claim 8, further comprising:
a first heat exchanger configured to exchange heat between the compressed air compressed by the compressor and a heat medium;
a high-temperature heat medium tank fluidly connected to the first heat exchanger and configured to store the heat medium supplied from the first heat exchanger;
a second heat exchanger fluidly connected to the high-temperature heat medium tank and configured to exchange heat between the heat medium supplied from the high-temperature heat medium tank and the compressed air supplied from the accumulator tank to the expanders; and
a low-temperature heat medium tank fluidly connected to the first heat exchanger and the second heat exchanger and configured to store the heat medium supplied from the second heat exchanger.

14. A method of controlling a compressed air energy storage power generation device including
a plurality of motors driven by input power;
a plurality of compressors driven by the motors, respectively, to compress air;
an accumulator tank configured to accumulate compressed air compressed by the compressors;
an expander driven by the compressed air supplied from the accumulator tank;
a generator driven by the expander to supply output power to a supply destination; and
a control device configured to control driving of the motors, the method comprising:
setting priority to the motors so that the motor whose elapsed time from stop is shorter has higher priority;
receiving a power supply command indicating an amount of the input power before the input power is supplied;
determining the number of the motors to be driven on the basis of the amount of the input power indicated by the power supply command; and
driving the motors in the descending order of the priority until the number of the driven motors becomes equal to the determined number of motors to be driven.
